# EUROPÄISCHE PATENTSCHRIFT

(11) **EP 0 470 598 B1**
(45) Veröffentlichungstag und Bekanntmachung des Hinweises auf die Patenterteilung: **08.11.1995**
(21) Anmeldenummer: 91113275.1
(22) Anmeldetag: 07.08.1991
(51) Int. Cl.: C08F 2/38

(54) **Fotochemische Herstellung von Halogenverbindungen**
Photochemical preparation of halogenated compounds
Préparation photochimique de composés halogènes

(30) Priorität: 08.08.1990 DE 4025154
(43) Veröffentlichungstag der Anmeldung: 12.02.1992
(73) Patentinhaber: Max-Planck-Gesellschaft zur Förderung der Wissenschaften e.V., D-37073 Göttingen (DE); HOECHST AKTIENGESELLSCHAFT, 65926 Frankfurt am Main (DE)
(72) Erfinder: Fuss, Werner, Dr., W-8046 Garching (DE); Zhang, Linyang, Prof., Dept. of Applied Chemistry, Hefel (Anhui) (CN); von Werner, Konrad, Dr., W-8268 Garching/Alz (DE)
(74) Vertreter: Huber, Bernhard, Dipl.-Chem.

(56) Entgegenhaltungen:
- DE-A- 2 164 567
- JP-A-48 025 416
- US-A- 2 875 253

## Beschreibung

Die vorliegende Erfindung betrifft ein Verfahren zur fotochemischen Herstellung von organischen Halogenverbindungen durch Telomerisation eines Alkylhalogenids und einer oder mehrerer Olefineinheiten unter Vermeidung von Nebenprodukten. Insbesondere betrifft die vorliegende Erfindung ein Verfahren zur Herstellung von Perfluoralkylbromiden.

Es ist bereits eine große Zahl von Methoden zur Herstellung von Perfluoralkylbromiden bekannt, von denen im folgenden einige aufgeführt sind.

Haszeldine (J.Chem.Soc. (1952) S. 4259-4268) beschreibt ein Verfahren zur Herstellung von Perfluoralkylbromiden aus Silbersalzen von Perfluorcarbonsäuren, die mit Brom umgesetzt werden, wobei das um ein Kohlenstoffatom verkleinerte Perfluoralkylbromid entsteht.

Das US-Patent 2,658,928 offenbart die Herstellung von Fluorkohlenstoffmonobromiden aus den entsprechenden Fluorkohlenstoffmonowasserstoff-Verbindungen durch Umsetzung mit elementarem Brom bei 500 - 600°C. Die Wasserstoffverbindungen werden ihrerseits durch Umsetzung von Perfluoralkanen mit elementarem Wasserstoff bei 800 - 900°C gewonnen.

Die DE-PS 11 21 598 offenbart ein Verfahren zur Herstellung von Perfluoralkylbromiden, worin ein Perfluorolefin oder ein halogensubstituiertes Perfluorolefin mit BrF₃ oder BrF₅ und Br₂ in Gegenwart eines inerten Lösungsmittels umgesetzt wird, wobei BrF an die Doppelbindung des Olefins addiert wird. Da die Addition jedoch nicht spezifisch erfolgt, entstehen bei diesem Verfahren immer zwei Isomere.

Die DE-AS 26 29 774 offenbart, daß Perfluoralkylchloride mit Bromwasserstoff in der Gasphase bei 100 - 500°C in Gegenwart verschiedener Katalysatoren, darunter Aktivkohle und Metallbromide, in die entsprechenden Perfluoralkylbromide überführt werden können.

Das US-Patent 4,222,968 offenbart die Umsetzung von Perfluorcarbonsäuren mit Bromsulfonsäurefluoriden bei 0 bis 50°C, wobei das um ein Kohlenstoffatom verkürzte Perfluoralkylbromid, HSO₃F und CO₂ als Reaktionsprodukte entstehen.

Das US-Patent 4,469,623 offenbart als Darstellungsmethode für Perfluoralkylbromide die thermische Zersetzung von Perfluoralkylsulfonylbromiden, die wiederum aus dem entsprechenden Perfluoralkylsulfonylfluorid hergestellt werden können. Diese Verbindung kann ihrerseits gemäß US-Patent 2,732,398 durch elektrochemische Fluorierung gewonnen werden.

Die oben genannten Verfahren weisen insofern alle Nachteile auf, daß dort Halogen, Halogenwasserstoff oder ähnlich gefährliche Substanzen als Reaktionspartner verwendet werden und überdies zum Teil drastische Reaktionsbedingungen erforderlich sind.

Die sogenannte Telomerisation ist eine weitere Technik zur Herstellung von organischen Molekülen, insbesondere Alkylhalogenverbindungen mittlerer Kettenlänge. Dabei handelt es sich um eine, fast immer radikalisch verlaufende Polymerisation von Olefinen (Gleichung 1), verknüpft mit einer Kettenübertragungsreaktion (Gleichung 2). Mit Ethylen als Beispiel für das Olefin lauten die beiden Reaktionen der Telomerisation wie folgt:

R(C₂H₄)ₙ₋₁ + C₂H₄ → R(C₂H₄)ₙ (1)

R(C₂H₄)ₙ + RX → R(C₂H₄)ₙX (2)

Das Startradikal R der Telomerisation entsteht aus dem Telogen R-X, bei dem es sich sehr häufig um eine Halogenverbindung handelt, wobei X z.B. Cl, Br oder I bedeuten kann. R kann man thermisch mit oder ohne Radikalstarter oder auch fotochemisch erzeugen. Eine detaillierte Übersicht der Telomerisation findet sich in Starks, Free radical telomerization, Academic Press, 1974.

Die Herstellung von Perfluoralkylbromiden durch Telomerisation ist an sich bekannt. So offenbart das US-Patent 2,875,253 die Telomerisation von Perfluoralkylbromiden oder -jodiden mit ungesättigten fluorierten Verbindungen bei 0 bis 200°C in Gegenwart eines Peroxykatalysators. Die DE-OS 24 16 261 offenbart die Umwandlung von kurzkettigen Perfluoralkylbromiden in der Gasphase bei Temperaturen von 250 bis 500°C ohne Katalysator in Gegenwart von Glasringen oder Metallspänen mit Tetrafluorethylen zu längerkettigen Perfluoralkylbromiden.

Bei den oben beschriebenen Telomerisationsverfahren erhält man jedoch kein einheitliches Produkt. Man findet hingegen ein Produktgemisch mit breiter Molekulargewichtsverteilung, dessen einzelne Bestandteile eine unterschiedliche Zahl n von Olefineinheiten enthalten, wobei die mittlere Zahl n der Olefineinheiten im Produktgemisch vom Verhältnis der Geschwindigkeiten der Reaktionsgleichungen (1) und (2) abhängt. Das mittlere Molekulargewicht der Telomerisationsprodukte kann somit auf gewisse Weise durch das Verhältnis der Konzentrationen von Olefin zu R-X gesteuert werden. Allerdings stößt die Methode jedoch an eine Grenze, wenn dieses Verhältnis zu sehr vom stöchiometrischen Verhältnis des Olefins zu R-X abweicht, das von den Endprodukten gefordert wird.

Weiterhin treten bei üblichen Telomerisationsverfahren auch solche Nebenprodukte auf, die sich vom Starterradikal R um eine ungerade Zahl von CF₂-Gruppen unterscheiden und Produkte, die ein F-Atom anstelle von X tragen, d.h. um unerwünschte Nebenprodukte, welche zusätzlich die Ausbeute der erwünschten Produkte verringern.

Als Starterverßindungen R-X für die Telomerisationsreaktion verwendet man bei bekannten Verfahren bevorzugt Jodverbindungen wie CF₃I, C₂F₅I, IC₂F₄I, da diese Verbindungen sehr leicht Telomerisationsreaktionen mit Olefinen wie C₂H₄ oder C₂F₄ eingehen können (Starks, Supra). Die Reaktion kann thermisch oder fotochemisch ausgelöst werden. Die dabei entstehenden Produkte können in eine Vielzahl anderer Produkte umgewandelt werden, z.B.

RC₂H₄I → RC₂H₄OH (3)

RC₂H₄I → R-CH=CH₂ → R-COOH (4)

2 RI + Zn → R₂ + ZnI₂ (5)

RI + Hal₂ → RHal + Hal-I, Hal = Br, Cl, F (6)

Allerdings bringt die Verwendung von Jod-Verbindungen auch Nachteile mit sich, die im relativ hohen Preis, der Korrosionsauslösung durch das begleitende Zersetzungsprodukt I₂ und die Giftigkeit mancher Verbindungen (z.B. IC₂F₄I) bedingt sind. Diese Nachteile könnte man vermeiden, wenn man anstelle der Jodverbindungen die entsprechenden Bromverbindungen einsetzen könnte, da eine Zersetzung zu Br₂ praktisch nicht auftritt. Weiterhin hat Reaktion (6) den Nachteil, daß die Handhabung der dort genannten Halogene in größeren Mengen schwierig und gefährlich ist und der Störfallverordnung unterliegt. Wenn man nun ein Bromid als Ausgangsmaterial verwendet, wäre Reaktion (6) unnötig, sofern ein Bromid, z.B. ein Perfluoralkylbromid, als Produkt gewünscht wird.

Alkylbromide als Ausgangsmaterial R-X sind jedoch bei 20°C nur wenig reaktiv, insbesondere für die Kettenübertragungsreaktion in Gleichung (2). Somit entstehen bei der Telomerisation bevorzugt höhermolekulare, wachsartige Polymere. Bei höheren Reaktionstemperaturen ist zwar das mittlere Molekulargewicht des Produktgemisches kleiner, es entstehen jedoch viele Nebenprodukte. Aufgrund dieser Probleme wird daher zur Herstellung von Perfluoralkylbromiden die direkte Telomerisation von R-Br mit einem perfluorierten Olefin z.B. C₂F₄ in der Praxis nicht angewandt.

Aufgabe der vorliegenden Erfindung war es somit, ein Verfahren bereitzustellen, welches die Nachteile des Standes der Technik mindestens teilweise beseitigt. Insbesondere war es die Aufgabe der vorliegenden Erfindung, ein Verfahren zu entwickeln, bei dem eine erhöhte Ausbeute der erwünschten Produkte unter möglichst weitgehender Vermeidung von Nebenprodukten erhalten wird.

Die erfindungsgemäße Aufgabe wird durch ein Verfahren zur fotochemischen Herstellung von Verbindungen der allgemeinen Formel

R - (C₂R₄')ₙ - X

durch Telomerisation eines Alkylhalogenids R-X als Telogen und eines Olefins C₂R₄' als Monomer gelöst, worin
R ein nicht, teilweise oder vollständig halogenierter Alkylrest ist,
R' jeweils gleich oder verschieden sein kann, und unabhängig voneinander H, F, Cl, Br oder eine substituierte oder nicht substituierte Alkyl- oder Arylgruppe bedeutet,
n eine natürliche Zahl von 2 bis 10 bedeutet und
X Br oder I bedeutet,
welches dadurch gekennzeichnet ist, daß man
(1) ein Reaktionsgemisch erzeugt, welches das Olefin und das Alkylhalogenid enthält,
(2) dieses Reaktionsgemisch mit UV-Licht von einer Wellenlänge bestrahlt, die zwischen 230 und 350 nm liegt und
(3) das oder die Endprodukte aus dem Reaktionsgemisch gewinnt.

Bei dem erfindungsgemäßen Verfahren verwendet man ein Alkylhalogenid R-X als Telogen, d.h. als Radikalbildner. X kann I oder Br bedeuten, vorzugweise bedeutet X Br. R kann ein nicht, teilweise oder vollständig halogenierter Alkylrest vorzugsweise mit 1 bis 12 C-Atomen, besonders bevorzugt mit 1 bis 8 C-Atomen sein. Beispiele für RX sind etwa CF₃X, C₂F₅X, XC₂F₄X, CH₃X, CX₂F₂, ClCF₂CF₂X, (CF₃)₂CFX oder auch größere Moleküle wie C₈F₁₇X oder C₆F₁₃X. Vorzugsweise ist R ein perhalogenierter Alkylrest, besonders bevorzugt ein perfluorierter Alkylrest oder ein Alkylrest, der mit einem Br-, Cl-, I-Atom und sonst vollständig mit Fluor substituiert ist. Besonders bevorzugt als Telogene für das erfindungsgemäße Verfahren sind CF₃Br, C₂F₅Br, BrC₂F₄Br, CBr₂F₂, ClCF₂CF₂Br, (CF₃)₂CFBr, C₈F₁₇Br oder C₆F₁₃Br. Am meisten bevorzugt sind CF₃Br, C₂F₅Br und BrC₂F₄Br.

Das bei dem erfindungsgemäßen Verfahren als Monomer verwendete Olefin besitzt die allgemeine Formel

C₂R'₄.

R' kann jeweils gleich oder verschieden sein und voneinander unabhängig H, F, Cl, Br oder eine substituierte oder nicht substituierte Alkyl- oder Arylgruppe bedeuten. Bevorzugte Beispiele für Olefine, die für das erfindungsgemäße Verfahren geeignet sind, sind C₂F₄, C₃F₆, C₂H₄, CF₂=CFCl oder CH₂=CF₂. Ganz allgemein sind besonders Olefine geeignet, die der radikalischen Polymerisation zugänglich und flüchtig sind, da man das erfindungsgemäße Verfahren vorzugsweise in der Gasphase durchführt. Bevorzugt sind perfluorierte Olefine, insbesondere C₂F₄. Man kann bei dem erfindungsgemäßen Verfahren auch zwei verschiedene Monomere verwenden (z.B. C₂H₄ und C₂F₄).

Die Zahl der Olefineinheiten im Endprodukt n beträgt vorzugsweise 2 bis 10. Da die Zusammensetzung des bei dem erfindungsgemäßen Verfahren erzeugten Produktgemisches auch vom Konzentrationsverhältnis Alkylhalogenid zu Olefin abhängt, wird man dieses Verhältnis je nach dem gewünschten Endprodukt wählen. So muß man eine höhere Alkylhalogenid-Konzentration oder/und eine geringere Olefinkonzentration einsetzen, wenn man ein Produkt von geringer Kettenlänge, d.h. geringem n wünscht.

Die erfindungsgemäße Reaktion wird vorzugsweise in der Gasphase durchgeführt. Der Druck ist nach oben begrenzt durch den Dampfdruck des Bromids oder Jodids und durch die Forderung, daß das Olefin nicht in großem Überschuß verwendet werden darf, um das Molekulargewicht nicht zu groß werden zu lassen. Der Gesamtdruck der Reaktionspartner beträgt vorzugsweise 10 mbar bis 2 bar (1 kPa bis 200 kPa).

Das erfindungsgemäße Verfahren kann jedoch auch in flüssiger Phase, gegebenenfalls in Lösung durchgeführt werden. Dabei sind Lösungsmittel geeignet, die nicht oder kaum mit Radikalen reagieren und die bei der Bestrahlungswellenlänge nicht wesentlich absorbieren. Beispiele sind n-Oktan, Cyclohexan, CFCl₂-CF₂Cl, Acetonitril, t-Butanol und CF₃C₆H₅ oder C₆F₁₃C₆H₅ (die beiden letzten nur bei Bestrahlungswellenlänge größer als 300 nm). Unpolare Lösungsmittel einschließlich des Ausgangsbromids bzw. - jodids erhöhen dabei den Anteil von höheren Telomerisationsprodukten, während polare Lösungsmittel, insbesondere t-Butanol und Acetonitril das mittlere Molekulargewicht der Telomerisationsprodukte verringern.

Als UV-Lichtquellen sind im Prinzip alle Lichtquellen einsetzbar, die UV-Licht im erfindungsgemäß geeigneten Wellenlängenbereich emittieren. Insbesondere sind Lichtquellen mit hoher Intensität bevorzugt, da eine Erhöhung der Bestrahlungsintensität überraschenderweise eine Verringerung des Anteils hochmolekularer Nebenprodukte am Reaktionsproduktgemisch bewirkt. So verwendet man für das erfindungsgemäße Verfahren vorzugsweise einen Laser, z.B. einen KrF-Laser (Wellenlänge 248 nm). Auch ein XeCl-Laser (Wellenlänge 308 nm) ist als Lichtquelle geeignet, und zwar insbesondere für Ausgangsverbindungen R-X, worin X für I steht, sowie für die Flüssigphase, wo die größere Wellenlänge eine größere Eindringtiefe zur Folge hat.

Man kann jedoch auch eine Niederdruck-Hg-Lampe (Hauptemissionslinie 253,7 nm) verwenden, wenn die 184,9 nm-Linie weggefiltert wird, z.B. mit einer für Vakuum-UV ungeeigneten Quarzglassorte wie Heralux oder mit einer Flüssigkeit wie Methanol oder Glykol, die gleichzeitig auch als Kühlmittel für die Lampe dienen kann. Man kann auch eine Hochdruck-Hg-Lampe (vor allem das Emissionsband mit Maximum bei 246 nm) in Kombination mit einem oder mehreren Filtern für kurzwelliges UV-Licht (unterhalb 230 nm) verwenden. Ebenfalls als geeignet hat sich eine Xe-Kurzbogenlampe in Verbindung mit einem für UV-Licht mit einer Wellenlänge unter 230 nm im wesentlichen undurchlässigen Filter erwiesen.

Zum Herausfiltern unerwünschter Wellenlängen des UV-Lichts verwendet man vorzugsweise neben den bereits genannten Filtern insbesondere dielektrische Spiegel mit einem Reflexionsbereich von 248 ± 15 nm (üblich als Laserspiegel) und etwas weniger gut aufgrund von Transmissionsverlusten, Bandpaßfilter, die in vielen Varianten z.B. in Kombination mit Hg-Lampen angeboten werden.

Das für das erfindungsgemäße Verfahren geeignete UV-Licht soll eine Wellenlänge zwischen 230 und 350 nm besitzen. Überraschenderweise wurde festgestellt, daß bei Bestrahlung des Reaktionsgemisches mit einer ungefilterten UV-Lichtquelle, welche Strahlung einer Wellenlänge von unterhalb 230 nm aussendet, immer ein gewisser Anteil unerwünschter Nebenprodukte mit einem ungeraden Kohlenstoffzahl (d.h., das Produkt enthält anstelle einer vollständigen Olefineinheit C₂F₄ nur eine CF₂-Gruppe) oder mit F anstelle von Br auftritt. Die Bildung dieser unerwünschten Nebenprodukte kann vermieden werden, wenn man gemäß dem Verfahren der vorliegenden Erfindung den kurzwelligen Teil des UV-Lichts unterhalb 230 nm wegfiltert. Weiterhin wurde festgestellt, daß bei einem Bromid als Telogen ein besonders bevorzugter nutzbarer Bereich der UV-Lichtquelle zwischen 230 und 270 und bei einem Jodid als Telogen zwischen 230 und 350 nm liegt, wobei dieser Bereich aber je nach verwendetem Halogenid auch etwas schmaler oder breiter sein kann. Besonders günstig hat sich für das erfindungsgemäße Verfahren eine Wellenlänge von 250 ± 15 nm erwiesen.

Nach Beendigung der erfindungsgemäßen Telomerisationsreaktion wird das erwünschte Endprodukt bzw. die erwünschten Endprodukte aus dem Reaktionsgemisch abgetrennt. Dabei kann die Auftrennung des Reaktionsgemisches und die Reinigung der Produkte auf eine übliche, dem Fachmann bekannte Weise, z.B. insbesondere durch fraktionierte Destillation, Extraktion, fraktionierte Fällung oder/und durch chromatographische Methoden erfolgen.

Weiterhin wurde festgestellt, daß auch die Bestrahlungsintensität einen Einfluß auf das mittlere Molekulargewicht des Produktgemisches besitzt. Man findet bei höheren Bestrahlungsintensitäten Produkte mit kürzerer Kettenlänge als bei einer niedrigen Bestrahlungsintensität. Dies läßt sich natürlich zur Ausbeuteerhöhung für ein im jeweiligen Verfahren gewünschtes Endprodukt ausnützen. So findet man bei Bestrahlung eines 1:1-Gasphasengemisches von BrC₂F₄Br + C₂F₄ (Gesamtdruck: 200 mbar) mit einem KrF-Laser (Wellenlänge 248 nm, Pulslänge 20 ns) mit einer Energiedichte von 10 mJ/cm², daß das entstehende Telomerisationsprodukt zu 90 % aus Br(C₂F₄)₂Br besteht. Bei Bestrahlung des gleichen Gemisches mit Strahlung zwischen 230 und 270 nm (Filter) aus einer 1kW-Xenon-Kurzbogenlampe, gebündelt auf eine Intensität von 0,3 W/cm² am Eintrittsfenster der Bestrahlungszelle, entsteht hingegen ein Produktgemisch mit einer höheren mittleren Kettenlänge, bestehend aus Br(C₂F₄)ₙBr mit 37 % n=2, 25 % n=3, 18 % n=4 und 12 % n=5. Verwendet man wiederum das gleiche Ausgangsgemisch, aber eine Niederdruck-Hg-Tauchlampe mit 0,1 W/cm² Strahlungsstärke bei 253,7 nm an der Oberfläche, dann findet man neben obigen Produkten schon 5 % wachsartige Polymere.

Das mittlere Molekulargewicht wurde in ähnlicher Weise reduziert, wenn die absorbierte Energie erhöht wird durch Wahl einer Wellenlänge, die stärker absorbiert wird. So wurden bei Bestrahlung von BrC₂F₄Br + C₂F₄ (je 200 mbar) mit einem XeCl-Laser (Wellenlänge 308 nm, schwache Absorption) wachsartige Polymere beobachtet, während bei Bestrahlung mit einem KrF-Laser (248 nm, etwa 1000 mal stärkere Absorption) bei gleicher Laserenergie das Hauptprodukt BrC₄F₈Br war.

Bei dem erfindungsgemäßen Verfahren hat es sich als besonders günstig erwiesen, die Reaktion in einer Gasphase durchzuführen und während der Reaktion das Gemisch aus Reaktanden und Produkten in einem Umlaufsystem mit Kühlfalle umzuwälzen. Dabei wählt man die Temperatur der Kühlfalle so, daß das gewünschte Endprodukt auskondensiert wird, während die leichter flüchtigen Komponenten des Reaktionsgemisches wieder in die Bestrahlungszone zurückgeleitet werden. Auf diese Weise erreicht man, daß nach einigen Umläufen die Produkte ein weitgehend einheitliches Molekulargewicht haben. Dies bedeutet, daß man das gewünschte Produkt in einer sehr hohen Ausbeute erhalten kann. Führt man etwa die Telomerisation von BrC₂F₄Br und C₂F₄ unter Verwendung einer 1kW-Xenon-Kurzbogenlampe als UV-Lichtquelle (Bestrahlungswellenlänge zwischen 230 und 270 nm) wie oben, aber mit einer Verringerung des C₂F₄-Drucks um die Hälfte (auf 50 mbar) durch, fügt bei Bedarf, d.h. mit fortschreitendem Umsatz wiederholt 50 mbar C₂F₄ hinzu und zirkuliert das Produktgemisch zwischen Bestrahlungszelle und einer Kühlfalle bei 5°C, dann ergibt sich bei nahezu vollständigem Umsatz ein Gemisch aus je 45 % Br(C₂F₄)₂Br und Br(C₂F₄)₃Br, wobei die letztgenannte Verbindung 82 % der Endprodukte bildet, die durch das Umwälzsystem nicht wieder in die Bestrahlungszone zurückgeführt werden.

Bei dem erfindungsgemäßen Verfahren kann gegebenenfalls noch eine Radikalstarterverbindung anwesend sein. Als Radikalstarter geeignet sind perfluorierte Diacylperoxide z.B.Bis(trifluoracetyl)peroxid oder Bis(pentafluorpropionyl)peroxid. Die Konzentration dieser Radikalbildner kann im Bereich von 0,01 bis 1 %, bezogen auf die Gesamtmolzahl der Reaktionsteilnehmer, liegen.

Die Reaktionstemperatur liegt wesentlich unter der Temperatur, bei der die Reaktion spontan verläuft; bei Bromiden also unter 400°C, bei Jodiden unter 150°C. Sie liegt vorzugsweise auch über 0°C. Besonders bevorzugt liegt sie bei Bromiden zwischen 25°C und 200°C und bei Jodiden zwischen 25°C und 100°C.

Mit dem erfindungsgemäßen Verfahren lassen sich eine Reihe wertvoller Verbindungen herstellen. So sind α,ω-Dihalogenperfluoralkane vom Typ X(CF₂CF₂)ₙX (X = Jod oder Brom, n ist vorzugsweise 3 und 4) wertvolle Zwischenprodukte zur Synthese von α,ω-difunktionellen Verbindungen (Dicarbonsäuren, Diole, Diene etc). Solche Verbindungen sind erfindungsgemäß durch Telomerisation von BrC₂F₄Br und C₂F₄ erhältlich. Ein Austausch von X gegen Cl oder F oder eine Kopplung der Endprodukte (z.B. Reaktion der Jodide mit Zn in Essigsäureanhydrid) gibt Inertflüssigkeiten oder Inertwachse, so ist z.B. C₁₆F₃₄ ein Spezialskiwachs.

Eine weitere Anwendung finden Perfluoralkylbromide (z.B. C₆F₁₃Br, C₈F₁₇Br, C₉F₁₉Br, BrC₆F₁₂Br oder BrC₈F₁₆Br) als Röntgenkontrastmittel nicht nur in Blutgefäßen sondern z.B. auch im Darm, Ultraschallkontrastmittel, als Sauerstoff-Carrier, für Fluor-Kernresonanztomographie zur Erkennung und Bekämpfung von Krebs und Krebszellen. Am bedeutsamsten ist jedoch die Verwendung von Mono- und Dibromperfluoralkanen mit Dampfdrücken von 5 bis 50 mbar als Blutersatzstoffe. Solche Verbindungen können gezielt und unter weitgehender Vermeidung von Nebenprodukten aus CF₃Br, BrC₂F₄Br bzw. C₂F₅Br und C₂F₄ hergestellt werden.

Die vorliegende Erfindung soll durch die nachfolgenden Beispiele in Verbindung mit den Abbildungen 1 bis 6 näher erläutert werden.
- Abb. 1: zeigt die Produktzusammensetzung bei Bestrahlung von BrC₂F₄Br + C₂F₄ mit einer Xe-Kurzbogenlampe in Abhängigkeit von der Anfangszusammensetzung.
- Abb. 2: zeigt die Produktzusammensetzung desselben Systems wie in Abb. 1 in Abhängigkeit von der Bestrahlungsintensität.
- Abb. 3: zeigt dasselbe System wie in Abb. 1 unter Benutzung des Umlaufsystems in Abhängigkeit von der Bestrahlungszeit.
- Abb. 4: zeigt die Produktzusammensetzung bei Bestrahlung von BrC₂F₄Br + C₂F₄ mit einer Niederdruck-Hg-Lampe ohne und mit Gasumwälzung.
- Abb. 5: zeigt dasselbe System wie Abb. 4 ohne (unten) und mit (oben) Filter.
- Abb. 6: zeigt die Produktzusammensetzung bei Bestrahlung von BrC₂F₄Br + C₂F₄ mit dem KrF-Laser ohne Gasumwälzung.

### Beispiel 1

### Bestrahlung mit einer Xe-Kurzbogenlampe

Zur Bestrahlung eines Reaktionsgemisches bestehend aus C₂F₄ + BrC₂F₄Br mit einer Xe-Kurzbogenlampe (Osram XBO 1000 Watt/HS.OFR) oder einer Hochdruck-Hg-Lampe (Osram HBO 500 Watt/2) wurde eine zylindrische Bestrahlungszelle von 10 cm Länge und 3,6 cm Durchmesser mit zwei Fenstern aus Quarzglas verwendet. Die Reaktionstemperatur betrug 25°C.
Die Zelle besaß 2 Gasanschlüsse. Im Falle der Umwälzung des Gases wurde als Gaseintritt der Anschluß dicht am Bestrahlungsfenster verwendet, um unter Umständen auftretende Niederschläge wegzuspülen. Neben der Bestrahlungszelle enthielt des Umwälzsystem noch eine Kühlfalle und eine Umwälzpumpe (Brey, TFK1M, ölfreie Drehschieberpumpe mit Graphitläufer), die mit einer Gasgeschwindigkeit von 0,2 l/sec. betrieben wurde. Die Lampen wurden mit einem Netzgerät und einem Gehäuse (Amko A 5001) betrieben, das einen Fokussierspiegel mit 20 cm Brennweite und f-Zahl 2,5 hatte.

Für die Hochdrucklampen wurde ein dielektrischer Spiegel verwendet, der über 90 % des Lichts zwischen 233 und 263 nm reflektiert, während die Reflexion für die anderen Wellenlängen im wesentlichen unter 5 % liegt.

Die Produkte wurden gaschromatographisch in Kombination mit einem Massenspektrometer analysiert. Als Säule wurde eine 0,2mm*25mm-Kapillare benutzt, die mit 5% Phenyl-Methylsilikon belegt war. Temperaturprogramm: 2 min 30°C, dann mit 5 K/min bis 200°C. Für die Massenspektrometer-Empfindlichkeit (Totalionenstrom von Masse 23 bis 800) wurde Gruppenadditivität angenommen: Das relative Signal von mehreren Eichverbindungen ließ sich gut darstellen als Summe von Beiträgen von 0,25, 0,40, 1,00 und 1,10 für die Gruppen Br, CF₃, C₂H₄ bzw. C₂F₄.

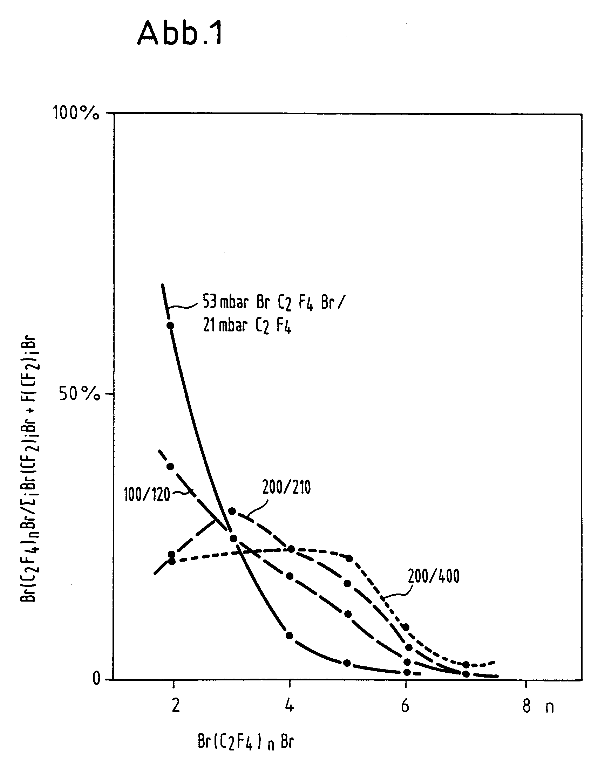

Die Abb. 1 - 3 zeigen die Produktzusammensetzungen unter verschiedenen Reaktionsbedingungen. Abb. 1 demonstriert den Einfluß des Konzentrationsverhältnisses Halogenid/Olefin. Umsatz und zugehörige Quantenausbeute waren mit wachsendem Olefindruck 11 % und 0,7, 12 % und 1,7, 15 und 2,1 bzw. 7 % und 2,1.

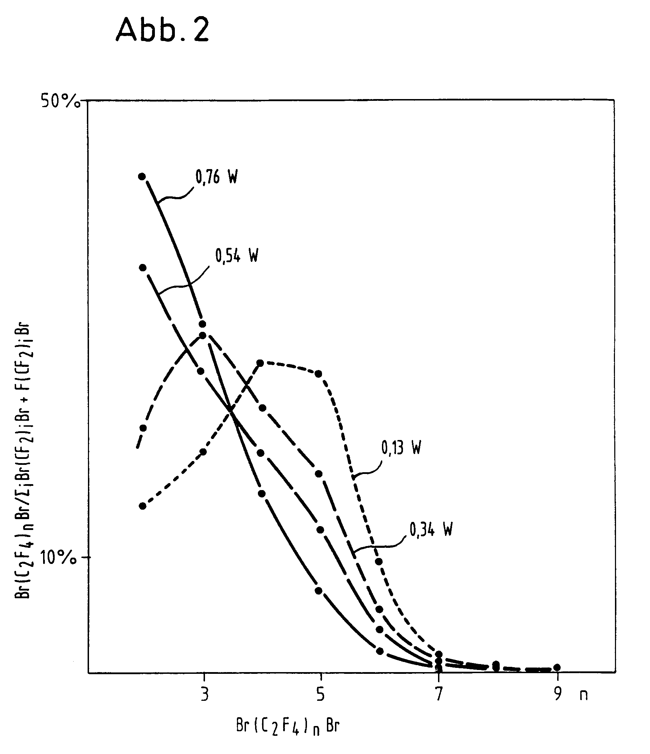

Abb. 2 zeigt den Einfluß der Bestrahlungsintensität. Die Anfangsdrücke für Halogenid und Olefin waren jeweils 200 mbar. Die Parameter an den Kurven geben die UV-Leistung (230 bis 270 nm) am Eintrittsfenster der Bestrahlungszelle an. Der Umsatz des Bromids betrug zwischen 9 % (0,13 W) und 14 % (0,76 W). Die zugehörige Quantenausbeute war 2 - 2,3. Bei den in Abb. 1 und 2 dargestellten Experimenten wurde das Umwälzsystem nicht benutzt und der Umsatz des Ausgangsbromids niedrig gehalten (0 - 15 %).

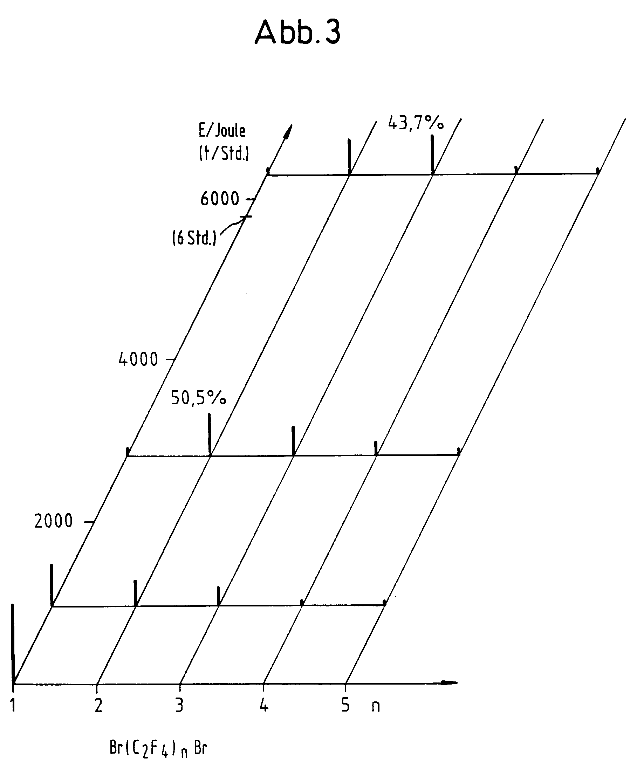

Abb. 3 zeigt dagegen die Produktzusammensetzungen mit zunehmendem Umsatz des Bromids (bis 96 %) bei Umwälzung mit Kühlfalle (5°C) und mit wiederholter Nachfüllung von C₂F₄ nach Maßgabe des Verbrauchs (d.h. des Druckabfalls). Die Bestrahlungszeit hängt mit der Bestrahlungsenergie (beide an der schrägen Koordinate angeschrieben) über die Bestrahlungsleistung (0,27 Watt im UV) zusammen. Die Höhe des ersten Balkens (im Zeitpunkt 0.) entspricht 100 % des Ausgangsbromids und gibt den Maßstab für die senkrechte Koordinate (Zusammensetzung) an. Der Bromidanfangsdruck betrug 100 mbar, die Olefinzugabe 4 x 65 mbar. Der Umsatz des Bromids betrug 96 %, die zugehörige Quantenausbeute 0,7.

### Beispiel 2

### Bestrahlung mit der Niederdruck-Hg-Lampe

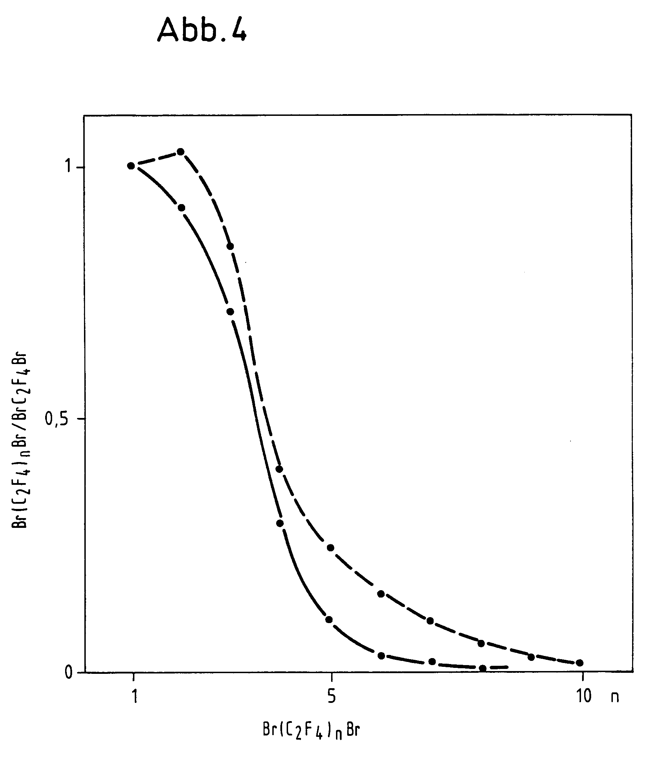

In den Versuchen mit der Niederdruck-Hg-Lampe wurde eine Tauchlampe Heraeus TNN 15/32 (15 W elektrisch, 3 W UV, 0,1 W/cm² an der Oberfläche) benutzt. In ihren Schutzmantel wurde Methanol (Schichtdicke 3 mm) zur Absorption der 185 nm-Linie gefüllt. Die Lampe wurde in einen 4,5 l-Dreihalskolben getaucht, dessen beide andere Hälse mit dem Umwälzsystem (s. Beispiel 1) verbunden waren. Das Ausgangsgemisch bestand aus 100 mbar BrC₂F₄Br + 20 mbar C₂F₄. Nach Maßgabe des Verbrauchs wurden beide Gase nachgefüllt. Die Menge des Ausgangsmaterials betrug insgesamt 20 g. Als flüssige Produkte wurden zusammen 12,5 g erhalten. Der Umsatz des Bromids betrug 68 bzw. 74 %. In der Abb. 4 ist die Produktzusammensetzung ohne Gasumwälzung als durchgezogene Linie und mit Gasumwälzung als gestrichelte Linie angegeben. Bei Benutzung der Umwälzung ist die Verringerung der hochmolekularen Produkte deutlich zu erkennen. Im Vergleich zur Xe-Lampe enthalten die Produkte, die bei Verwendung der Niederdruck-Hg-Lampe als UV-Quelle, entstehen, eine C₂F₄-Einheit mehr.

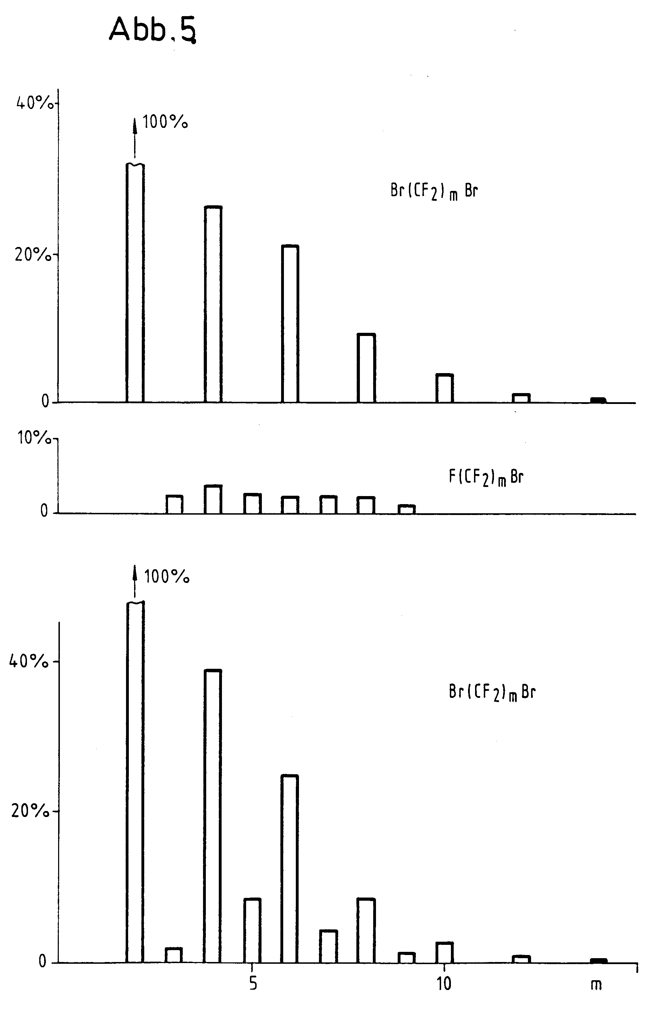

Abb. 5 zeigt den Unterschied der Produktzusammensetzung mit oder ohne Methanolfilter. Hier wurde eine kleine Quarzzelle (65 ml) von außen beleuchtet, ohne die Gasumwälzung und bei einem Umsatz von 38 bzw. 51 % des Bromids mit bzw. ohne Methanol. Mit Methanol als Filter wurden keine Monobromide und keine ungeraden C-Zahlen beobachtet. Der Anfangsdruck des Bromids betrug 100 mbar. Das Olefin wurde in drei Portionen (50 + 48 + 28 mbar) nach Maßgabe des Verbrauchs zugegeben. Die Bestrahlungszeit war in beiden Fällen 15 Minuten.

### Beispiel 3

### Bestrahlung mit dem KrF-Laser

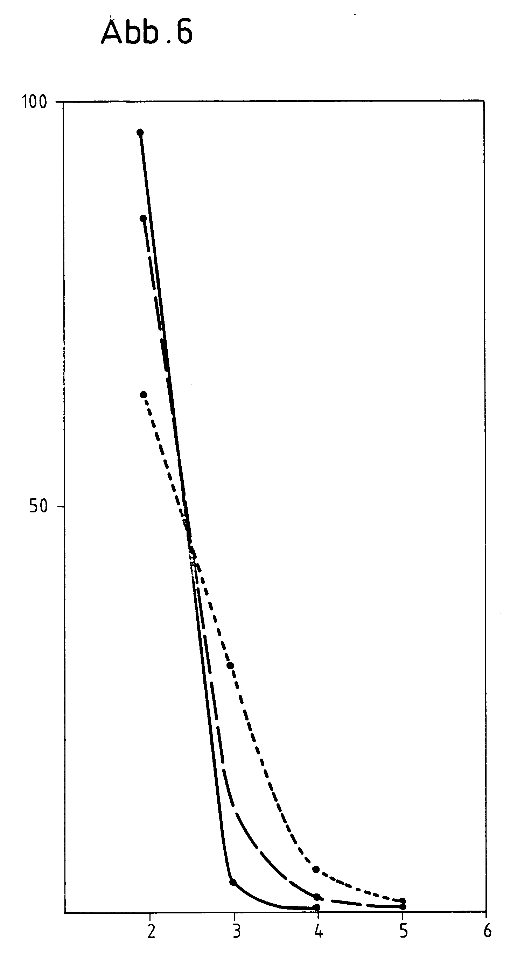

Bei den Versuchen mit dem KrF-Laser (Lambdaphysik EMG 102) wurde die Zelle und das Umwälzsystem von Beispiel 1 benützt. Die Laserenergie am Eintrittsfenster betrug 40 mJ/Puls bei einer Pulsdauer von 20 ns. Der Strahlquerschnitt war 2,8 cm². Abb. 6 zeigt einige Beispiele der Produktzusammensetzung nach Bestrahlung von BrC₂F₄Br + C₂F₄ bei etwa 33 % Umsatz des Bromids ohne Gasumwälzung. Die Angabe 4 x 50 mbar C₂F₄ bei der gepunkteten Kurve bedeutet, daß das Olefin in 4 Portionen nach Maßgabe des Verbrauchs zugegeben wurde. Der Umsatz des Bromids und die zugehörige Quantenausbeute waren bei der durchgezogenen, der gestrichelten und der gepunkteten Kurve 20 % und 1,8, 32 % und 1,6 bzw. 72 % und 0,7. Unabhängig von der Zusammensetzung des Ausgangsgemisches überwiegt immer bei weitem (85 - 93 %) das Produkt BrC₄F₈Br.

### Beispiel 4

Es wurden weitere Telomerisationsexperimente mit dem KrF-Laser durchgeführt, wobei Laser und Bestrahlungszelle wie in Beispiel 3 waren. Es wurde bis zu jeweils 15 % Umsatz des Bromids bestrahlt. Das Umwälzsystem wurde nicht verwendet.

Bei Bestrahlung von 200 mbar CF₃Br + 400 mbar C₂H₄ entstehen 93 % CF₃C₂H₄Br, 3,2 % CF₃C₄H₈CF₃ und 2,5 % CF₃C₄H₈Br. Mit 25 statt 400 mbar C₂H₄ erhält man 94 % CF₃C₂H₄Br, 1,5 % CF₃C₄H₈CF₃ und etwa 4 % C₂F₆.

Genau entsprechende Ergebnisse zeigte die Telomerisation von C₂F₅Br und C₂H₄.

Bei Bestrahlung von 200 mbar BrC₂F₄Br + 400 mbar C₂H₄ mit 90 mJ bzw. 4 mJ Pulsen des KrF-Lasers wurde folgende Produktzusammensetzung erhalten:

| Laserenergie | 90 mJ | 4 mJ |
|---|---|---|
| BrC₂F₄C₂H₄Br | 47 % | 33,8 % |
| BrC₂F₄C₄H₈C₂F₄Br | 20,7 | 42,3 |
| BrC₂F₄C₂H₄C₂F₄Br | 16,0 | 3,8 |
| BrC₄F₈Br | 7,8 | 3,6 |
| BrC₂F₄C₄H₈Br | 3,1 | 6,3 |
| BrC₂F₄C₂H₃ | 2,5 | 5,1 |
| BrC₂F₄C₂H₅ | 2,5 | 5,1 |
| Quantenausbeute des Hauptprodukts | 1,4 | 4,5 |

Setzt man der Reaktionsmischung zusätzlich 125 mbar C₂F₄ zu (Laser 20 mJ), dann entsteht BrC₂F₄C₄H₈C₂F₄Br mit Quantenausbeute 93 und Selektivität 78 %.

Aus 6 mbar BrC₂F₄C₂H₄Br + 100 mbar C₂H₄ entstehen bei 25 mJ

| Laserenergie | |
|---|---|
| BrC₂H₄C₂F₄C₂H₄Br | 60 % (Quantenausbeute 0,4) |
| BrC₂F₄C₄H₈C₂F₄Br | 30 |
| BrC₂F₄C₄H₈C₂F₄C₂H₄Br | 6,5 |
| BrC₂F₄C₄H₈Br | 3,5 |

Mit viel niedrigeren Bestrahlungsintensitäten wie z.B. aus einer Hg-Niederdrucklampe ist BrC₂F₄C₄H₈Br das Hauptprodukt.

## Patentansprüche

1. Verfahren zur fotochemischen Herstellung von Verbindungen der allgemeinen Formel
R - (C₂R₄')ₙ - X
durch Telomerisation eines Alkylhalogenids R-X als Telogen und eines Olefins C₂R₄' als Monomer, worin
R ein nicht, teilweise oder vollständig halogenierter Alkylrest ist,
R' jeweils gleich oder verschieden sein kann und unabhängig voneinander H, F, Cl, Br oder eine substituierte oder nicht substituierte Alkyl- oder Arylgruppe bedeutet,
n eine natürliche Zahl von 2 bis 10 bedeutet und
X Br oder I bedeutet,
**dadurch gekennzeichnet,**
daß man
(1) ein Reaktionsgemisch erzeugt, welches das Olefin und das Alkylhalogenid enthält,
(2) dieses Reaktionsgemisch mit UV-Licht von einer Wellenlänge bestrahlt, die zwischen 230 und 350 nm liegt
und
(3) das oder die Endprodukte aus dem Reaktionsgemisch gewinnt.

2. Verfahren nach Anspruch 1,
**dadurch gekennzeichnet,**
daß man als Telogen ein Alkylbromid R-Br verwendet.

3. Verfahren nach Anspruch 1 oder 2,
**dadurch gekennzeichnet,**
daß man als Telogen ein Mono- oder Dibromperfluoralkan verwendet

4. Verfahren nach Anspruch 1, 2 oder 3,
**dadurch gekennzeichnet,**
daß man als Telogen CF₃Br, C₂F₅Br, BrC₂F₄Br, CBr₂F₂, ClCF₂CF₂Br, (CF₃)₂CFBr, C₈F₁₇Br oder C₆F₁₃Br verwendet.

5. Verfahren nach einem der Ansprüche 1 bis 4,
**dadurch gekennzeichnet,**
daß man als Olefin C₂F₄, C₂H₄, C₃F₆, CF₂=CFCl oder CH₂=CF₂ verwendet.

6. Verfahren nach Anspruch 4 oder 5,
**dadurch gekennzeichnet,**
daß man als Telogen BrC₂F₄Br und als Olefin C₂F₄ verwendet.

7. Verfahren nach Anspruch 4 oder 5,
**dadurch gekennzeichnet,**
daß man als Telogen CF₃Br oder C₂F₅Br und als Olefin C₂F₄ verwendet.

8. Verfahren nach Anspruch 4 oder 5,
**dadurch gekennzeichnet,**
daß man als Alkylhalogenid C₈F₁₇Br oder C₆F₁₃Br und als Olefin C₂H₄ verwendet.

9. Verfahren nach einem der vorhergehenden Ansprüche,
**dadurch gekennzeichnet,**
daß man eine UV-Lichtquelle mit hoher Bestrahlungsintensität verwendet.

10. Verfahren nach Anspruch 9,
**dadurch gekennzeichnet,**
daß man einen Laser als UV-Lichtquelle verwendet.

11. Verfahren nach Anspruch 10,
**dadurch gekennzeichnet,**
daß man einen KrF-Laser mit einer Wellenlänge von 248 nm als UV-Lichtquelle verwendet.

12. Verfahren nach Anspruch 9,
**dadurch gekennzeichnet,**
daß man einen XeCl-Laser mit einer Wellenlänge von 308 nm verwendet.

13. Verfahren nach einem der vorhergehenden Ansprüche,
**dadurch gekennzeichnet,**
daß man die Reaktion in der Gasphase durchführt.

14. Verfahren nach Anspruch 13,
**dadurch gekennzeichnet,**
daß man das Reaktionsgemisch in einem Umlaufsystem mit Kühlfalle zur Kondensation von schwer flüchtigen Anteilen des Produktgemisches umwälzt.

15. Verfahren nach einem der vorhergehenden Ansprüche,
**dadurch gekennzeichnet,**
daß man die Reaktion in Gegenwart von 0,01 bis 1 % eines perfluorierten Diacylperoxids, bezogen auf die Gesamtmolzahl der Reaktionsteilnehmer, durchführt.

16. Verfahren nach einem der vorhergehenden Ansprüche,
**dadurch gekennzeichnet,**
daß man die Reaktion bei 0°C bis 200°C durchführt, wenn das Telogen ein Bromid ist, und bei 0°C bis 100°C, wenn das Telogen ein Jodid ist.

17. Verfahren nach Anspruch 16,
**dadurch gekennzeichnet,**
daß man die Reaktion bei einer Temperatur von mindestens 25°C durchführt.

## Claims

1. Process for the photochemical production of compounds of the general formula:
R - (C₂R₄ʼ)ₙ - X
by telomerisation of an alkyl halide R-X as telogen and of an olefin C₂R₄' as monomer, wherein R is an alkyl radical not, partly or completely halogenated, R' can each be the same or different and, independently of one another, signify H, F, Cl, Br or a substituted or unsubstituted alkyl or aryl group, n signifies a natural number from 2 to 10 and X signifies Br or I, characterised in that one
(1) produces a reaction mixture which contains the olefin and the alkyl halide,
(2) irradiates this reaction mixture with UV light of a wavelength which lies between 230 and 350 nm, and
(3) obtains the end product or end products from the reaction mixture.

2. Process according to claim 1, characterised in that one uses an alkyl bromide R-Br as telogen.

3. Process according to claim 1 or 2, characterised in that one uses a mono- or dibromoperfluoroalkane as telogen.

4. Process according to claim 1, 2 or 3, characterised in that one uses CF₃Br, C₂F₅Br, BrC₂F₄Br, CBr₂F₂, ClCF₂CF₂Br, (CF₃)₂CFBr, C₈F₁₇Br or C₆F₁₃Br as telogen.

5. Process according to one of claims 1 to 4, characterised in that one uses C₂F₄, C₂H₄, C₃F₆, CF₂=CFCl or CH₂=CF₂ as olefin.

6. Process according to claim 4 or 5, characterised in that one uses BrC₂F₄Br as telogen and C₂F₄ as olefin.

7. Process according to claim 4 or 4, characterised in that one uses CF₃Br or C₂F₅Br as telogen and C₂F₄ as olefin.

8. Process according to claim 4 or 5, characterised in that one uses C₈F₁₇Br or C₆F₁₃Br as alkyl halide and C₂H₄ as olefin.

9. Process according to one of the preceding claims, characterised in that one uses a UV light source with high irradiation intensity.

10. Process according to claim 9, characterised in that one uses a laser as UV light source.

11. Process according to claim 10, characterised in that one uses a KrF laser with a wavelength of 248 nm as UV light source.

12. Process according to claim 9, characterised in that one uses a XeCl laser with a wavelength of 308 nm.

13. Process according to one of the preceding claims, characterised in that one carries out the reaction in the gas phase.

14. Process according to claim 13, characterised in that one cycles the reaction mixture in a circulation system with cold trap for the condensation of components of the product mixture of low volatility.

15. Process according to one of the preceding claims, characterised in that one carries out the reaction in the presence of 0.01 to 1% of a perfluorinated diacyl peroxide, referred to the total mole number of the reaction participants.

16. Process according to one of the preceding claims, characterised in that one carries out the reaction at 0°C to 200°C when the telogen is a bromide and at 0°C to 100°C when the telogen is an iodide.

17. Process according to claim 16, characterised in that one carries out the reaction at a temperature of at least 25°C.

## Revendications

1. Procédé pour la préparation photochimique de composés répondant à la formule générale
R - (C₂R₄')ₙ - X
par télomérisation d'un halogénure d'alkyle R-X en tant que télogène et d'une oléfine C₂R₄' en tant que monomère, formule dans laquelle R est un reste alkyle non halogéné, partiellement ou entièrement halogéné,
R' peut être dans chaque cas identique ou différent et signifie, indépendamment, H, F, Cl, Br ou un groupe alkyle ou aryle substitué ou non substitué;
n signifie un nombre entier de 2 à 10 et X signifie Br ou I, caractérisé en ce qu'on
1) produit un mélange réactionnel qui contient l'oléfine et l'halogénure d'alkyle,
2) irradie ce mélange réactionnel avec de la lumière UV d'une longueur d'onde qui se situe entre 230 et 350 nm et
3) récupère le ou les produits finaux à partir du mélange réactionnel.

2. Procédé selon la revendication 1, caractérisé en ce qu'on emploie un bromure d'alkyle R-Br en tant que télogène.

3. Procédé selon la revendication 1 ou 2, caractérisé en ce qu'on emploie un mono- ou un dibromoperfluoralcane en tant que télogène.

4. Procédé selon la revendication 1, 2 ou 3, caractérisé en ce qu'on emploie CF₃Br, C₂F₅Br, BrC₂F₄Br, CBr₂F₂, ClCF₂CF₂Br, (CF₃)₂CFBr, C₈F₁₇Br ou C₆F₁₃Br en tant que télogène.

5. Procédé selon l'une des revendications 1 à 4, caractérisé en ce qu'on emploie C₂F₄, C₂H₄, C₃F₆, CF₂=CFCl ou CH₂=CF₂ en tant qu'oléfine.

6. Procédé selon la revendication 4 ou 5, caractérisé en ce qu'on emploie BrC₂F₄Br en tant que télogène et C₂F₄ en tant qu'oléfine.

7. Procédé selon la revendication 4 ou 5, caractérisé en ce qu'on emploie CF₃Br ou C₂F₅Br en tant que télogène et C₂F₄ en tant qu'oléfine.

8. Procédé selon la revendication 4 ou 5, caractérisé en ce qu'on emploie C₈F₁₇Br ou C₆F₁₃Br en tant qu'halogénure d'alkyle et C₂H₄ en tant qu'oléfine.

9. Procédé selon l'une des revendications précédentes, caractérisé en ce qu'on utilise une source de lumière UV avec une forte intensité d'irradiation.

10. Procédé selon la revendication 9, caractérisé en ce qu'on utilise un laser comme source de lumière UV.

11. Procédé selon la revendication 10, caractérisé en ce qu'on utilise un laser à KrF d'une longueur d'onde de 248 nm comme source de lumière UV.

12. Procédé selon la revendication 9, caractérisé en ce qu'on utilise un laser à XeCl d'une longueur d'onde de 308 nm.

13. Procédé selon les revendications précédentes, caractérisé en ce qu'on effectue la réaction en phase gazeuse.

14. Procédé selon la revendication 13, caractérisé en ce qu'on fait circuler le mélange réactionnel dans un système de recyclage avec des pièges à refroidissement pour condenser les fractions faiblement volatiles du mélange de produits.

15. Procédé selon l'une des revendications précédentes, caractérisé en ce qu'on conduit la réaction en présence de 0,01 à 1% d'un peroxyde de diacyle perfluoré, par rapport au nombre total de modes des partenaires réactionnels.

16. Procédé selon l'une des revendications précédentes, caractérisé en ce qu'on effectue la réaction entre 0°C et 200°C lorsque le télogène est un bromure, et entre 0°C et 100°C lorsque le télogène est un iodure.

17. Procédé selon la revendication 16, caractérisé en ce qu'on effectue la réaction à une température d'au moins 25°C.
